# EUROPEAN PATENT SPECIFICATION

(11) **EP 3 780 469 B1**
(45) Date of publication and mention of the grant of the patent: **28.06.2023**
(21) Application number: 19800595.1
(22) Date of filing: 05.05.2019
(51) Int. Cl.: H04L 5/00, H04B 7/06, H04B 7/0404

(54) **PROCESSING METHOD AND APPARATUS BASED ON UPLINK SIGNAL, RELATED DEVICE, AND STORAGE MEDIUM**
VERARBEITUNGSVERFAHREN UND VORRICHTUNG AUF DER GRUNDLAGE EINES UPLINK-SIGNALS, ZUGEHÖRIGE VORRICHTUNG UND SPEICHERMEDIUM
APPAREIL ET PROCÉDÉ DE TRAITEMENT BASÉS SUR UN SIGNAL EN LIAISON MONTANTE, DISPOSITIF ASSOCIÉ ET SUPPORT DE STOCKAGE

(30) Priority: 11.05.2018 CN 201810446930
(43) Date of publication of application: 17.02.2021
(73) Proprietor: China Mobile Communication Co., Ltd Research Institute, Beijing 100053 (CN); China Mobile Communications Group Co., Ltd., Beijing 100032 (CN)
(72) Inventor: LI, Yan, Beijing 100053 (CN); WANG, Fei, Beijing 100053 (CN); HOU, Xueying, Beijing 100053 (CN); ZHENG, Yi, Beijing 100053 (CN)
(74) Representative: J A Kemp LLP
(86) International application number: PCT/CN2019/085579
(87) International publication number: WO 2019/214555

(56) References cited:
- CN-A- 106 685 621
- CN-A- 107 294 686
- CATT: "Remaining issues on SRS", 3GPP DRAFT; R1-1803749, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 7 April 2018 (2018-04-07), XP051413685, Retrieved from the Internet: URL:http://www.3gpp.org/ftp/tsg%5Fran/WG1% 5FRL1/TSGR1%5F92b/Docs/ [retrieved on 2018-04-07]
- SONY: "Summary of SRS", 3GPP TSG RAN WGI Meeting #92-Bis, R1-1805695, vol. RAN WG1, 24 April 2018 (2018-04-24), pages 1-50, XP051435663, Sanya,China
- SONY: "Summary of SRS", 3GPP TSG RAN WGI Meeting #92-Bis, R1-1805678, vol. RAN WG1, 19 April 2018 (2018-04-19), pages 1-49, XP051427804, Sanya,China
- ERICSSON: "Remaining Issues on SRS", 3GPP TSG RAN WGI Meeting #92-Bis , RI-1804985, vol. RAN WG1, 7 April 2018 (2018-04-07), pages 1-5, XP051414308, Sanya, China
- CMCC: "Discussion on remaining issues on SRS", 3GPP DRAFT; R1-1806360, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 12 May 2018 (2018-05-12), XP051462503, Retrieved from the Internet: URL:http://www.3gpp.org/ftp/tsg%5Fran/WG1% 5FRL1/TSGR1%5F93/Docs [retrieved on 2018-05-12]
- SAMSUNG: "Remaining issues on SRS", 3GPP DRAFT; R1-1806725, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 11 May 2018 (2018-05-11), XP051461934, Retrieved from the Internet: URL:http://www.3gpp.org/ftp/tsg%5Fran/WG1% 5FRL1/TSGR1%5F93/Docs [retrieved on 2018-05-11]

## Description

### CROSS-REFERENCE TO RELATED APPLICATION

The present application is based on and claims priority to Chinese Patent Application No. 201810446930.8, filed on May 11, 2018.

### TECHNICAL FIELD

The disclosure relates to the field of wireless communications, and particularly to an uplink-signal-based processing method implemented by a network device, an uplink-signal-based processing method implemented by a terminal, a network device, a terminal, and a storage medium.

### BACKGROUND

In a communication system, a base station estimates uplink channel quality for different bands using a sounding reference signal (SRS).

SRSs may be divided into two types, i.e., periodic and semi-persistent SRSs and aperiodic SRSs respectively. However, when aperiodic SRSs are used for antenna switching, a guard interval of at least one symbol is required to be reserved between the aperiodic SRSs, and the aperiodic SRSs may be transmitted on last six symbols of each slot only, so that it is impossible to complete transmission of multiple aperiodic SRSs for antenna switching in a slot. That is, for transmission of aperiodic SRSs for antenna switching, there is yet no solution at present.

SONY: "Summary of SRS", 3GPP TSG RAN WG1 Meeting #92-Bis, R1-1805695, discusses proposals regarding SRS specification.

### SUMMARY

The present invention is set out in the appended set of claims.

In a first aspect, an uplink-signal-based processing method implemented by a network device is provided in independent claim 1.

In a second aspect, an uplink-signal-based processing method implemented by a terminal is provided in independent claim 8.

In a third aspect, a network device is provided in independent claim 12.

In a fourth aspect, a terminal is provided in independent claim 13.

In a fifth aspect, a storage medium is provided in independent claim 14.

In the present invention, considering that a guard interval of at least one symbol is required to be reserved between aperiodic SRSs for antenna switching, for the aperiodic SRSs for antenna switching, the two aperiodic SRS resource sets are configured for the terminal to enable the terminal to transmit the aperiodic SRSs using the two aperiodic SRS resource sets, so that transmission of the aperiodic SRSs for antenna switching is implemented.

### BRIEF DESCRIPTION OF THE DRAWINGS

FIG. 1 is a flowchart of an uplink-signal-based processing method for a network device side according to an embodiment of the disclosure.
FIG. 2 is a flowchart of an uplink-signal-based processing method for a terminal side according to an embodiment of the disclosure.
FIG. 3 is a flowchart of an uplink-signal-based processing method according to an embodiment of the disclosure.
FIG. 4 is a structure diagram of an uplink-signal-based processing apparatus according to an embodiment not covered by the independent claims.
FIG. 5 is a structure diagram of another uplink-signal-based processing apparatus according to an embodiment not covered by the independent claims.
FIG. 6 is a structure diagram of a network device according to an embodiment of the disclosure.
FIG. 7 is a structure diagram of a terminal according to an embodiment of the disclosure.
FIG. 8 is a structure diagram of an uplink-signal-based processing system according to an embodiment not covered by the independent claims.

### DETAILED DESCRIPTION

The disclosure will further be described below in combination with the drawings and embodiments in detail.

When aperiodic SRSs are used for antenna switching, it is impossible to transmit the aperiodic SRSs in a slot, and this is mainly because a guard interval of at least one symbol is required to be reserved between the aperiodic SRSs and the aperiodic SRSs can be transmitted on last six symbols of each slot only. Therefore, it is impossible to complete transmission of multiple aperiodic SRSs for antenna switching in a slot.

For example, for aperiodic SRSs for 1-Transmit 4-Receive (1T4R) antenna switching, four SRS resources are required to correspond to four antenna ports, respectively. As shown in Table 1, during SRS antenna switching, a guard interval is required to be reserved between two SRS resources. Therefore, for 1T4R antenna switching, at least seven symbols are required to transmit SRS resources. However, SRSs can only be transmitted on last six uplink symbols of each slot, so that it is impossible to complete transmission of the SRSs requiring seven symbols for 1T4R antenna switching in a slot.

**Table 1**

| *µ* | Δ*ƒ* = 2*^{µ}* ·15[kHz] | Guard interval |
|---|---|---|
| 0 | 15 | 1 |
| 1 | 30 | 1 |
| 2 | 60 | 1 |
| 3 | 120 | 2 |

Based on this, in various embodiments of the disclosure, when aperiodic SRSs are used for antenna switching, two aperiodic SRS resource sets for antenna switching are configured for a terminal, and four SRS resources in the two aperiodic SRS resource sets may be associated with four different antenna ports of the terminal respectively.

According to the solutions of the embodiments of the disclosure, considering a guard interval between aperiodic SRSs, for the aperiodic SRSs for antenna switching, the two aperiodic SRS resource sets (the SRS resource set may be called an SRS resource set) are configured for the terminal, so that the terminal can transmit the aperiodic SRSs using the two aperiodic SRS resource sets, thereby realizing transmission of the aperiodic SRSs for antenna switching.

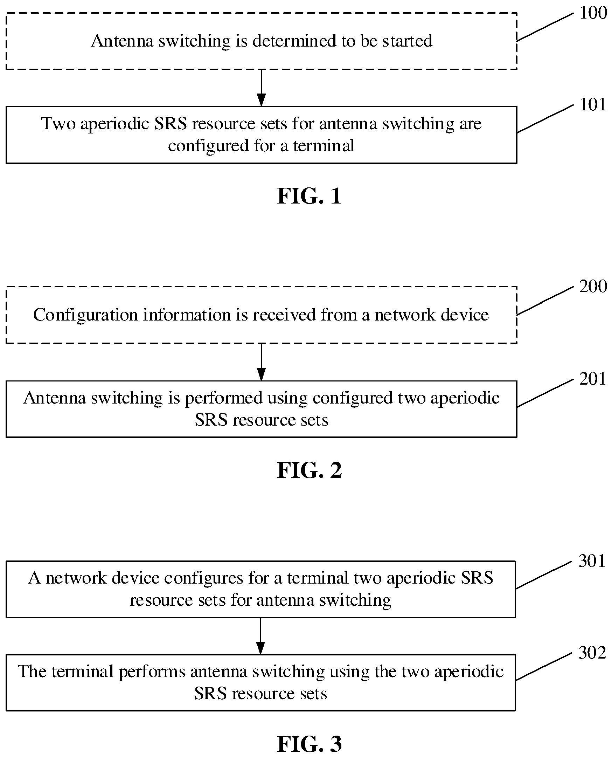

The embodiments of the disclosure provide an uplink-signal-based processing method, which is applied to a network device, specifically a base station. In a 5th-generation (5G) system, a base station is called a next-generation Node B (gNB). As illustrated in FIG. 1, the method includes the following operations.

In 100, antenna switching is determined to be started.

Herein, antenna switching is determined to be started based on a setting of a higher layer parameter. When the higher layer parameter Usage is set to be "antenna switching", antenna switching is determined to be started.

In 101, two aperiodic SRS resource sets for antenna switching are configured for a terminal.

In an embodiment, the two aperiodic SRS resource sets include totally four SRS resources, the four SRS resources are transmitted on different OFDM symbols of two different slots, each SRS resource in the two aperiodic SRS resource sets includes one SRS port, and the SRS port of each SRS resource is associated with a different antenna port of the terminal.

In an implementation, the two aperiodic SRS resource sets may be triggered by a piece of DCI for transmission.

In such case, during configuring the two aperiodic SRS resource sets, the method further includes at least one of the following operations:
configuring the two aperiodic SRS resource sets with same values of higher layer parameter aperiodicSRS-ResourceTrigger; or
configuring the two aperiodic SRS resource sets with different values of higher layer parameter slotoffset.

In the present invention, the two aperiodic SRS resource sets are configured with same aperiodicSRS-ResourceTrigger parameter values and different slotoffset parameter values.

An aperiodicSRS-ResourceTrigger parameter indicates aperiodic SRS resource sets triggered by the DCI, and a slotoffset parameter indicates that transmission of an aperiodic SRS is started after an interval of slots in a number equal to the slotoffset after triggering of the DCI.

That is, the terminal determines that the triggered SRS resource sets are the two aperiodic SRS resource sets based on at least one of the following:
two same values of higher layer parameter aperiodicSRS-ResourceTrigger; or
two different values of higher layer parameter slotoffset.

In another implementation, the two aperiodic SRS resource sets are triggered by two pieces of DCI for transmission, respectively.

In an embodiment, antenna switching may be 1T4R antenna (four-port antenna) switching. That is, the aperiodic SRSs for antenna switching are aperiodic SRSs for 1T4R antenna switching.

Only when the higher layer parameters Usage of both the two aperiodic SRS resource sets are set to be antenna switching, the two aperiodic SRS resource sets are used for four-port antenna switching.

During a practical application, the numbers of the SRS resources in the two aperiodic SRS resource sets are configured in the following two manners.

A first manner: each of the two aperiodic SRS resource sets is configured with two SRS resources.

A second manner: one of the two aperiodic SRS resource sets is configured with one SRS resource, and the other of the two aperiodic SRS resource sets is configured with three SRS resources.

During the practical application, one of the abovementioned manners may be selected as required.

After the configuration is completed, the network device may transmit configuration information to the terminal so that the terminal can perform the transmission of aperiodic SRSs.

Correspondingly, the embodiments of the disclosure also provide an uplink-signal-based processing method, which is applied to a terminal. As illustrated in FIG. 2, the method includes the following operations.

In 200, configuration information is received from a network device.

In 201, antenna switching is performed using configured two aperiodic SRS resource sets.

In other words, aperiodic SRSs for antenna switching are transmitted using the two aperiodic SRS resource sets.

In an implementation, the two aperiodic SRS resource sets are triggered by a piece of DCI for transmission.

Based on this, during performing the antenna switching, the terminal determines that triggered SRS resource sets are the two aperiodic SRS resource sets based on a piece of received DCI.

In such case, the terminal determines that the triggered SRS resource sets are the two aperiodic SRS resource sets based on at least one of the following:
two same values of higher layer parameter aperiodicSRS-ResourceTrigger; or
two different values of higher layer parameter slotoffset.

In another implementation, the two aperiodic SRS resource sets are triggered by two pieces of DCI for transmission, respectively.

Based on this, during performing antenna switching, the terminal determines, based on one piece of DCI in two pieces of received DCI, that a SRS resource set triggered by the piece of DCI is one aperiodic SRS resource set in the two aperiodic SRS resource sets, and determines, based on the other of the two pieces of received DCI, that a SRS resource set triggered by the other piece of the DCI is the other aperiodic SRS resource set in the two aperiodic SRS resource sets.

In an implementation, antenna switching may be 1T4R antenna (four-port antenna) switching. That is, the aperiodic SRSs for antenna switching are aperiodic SRSs for 1T4R antenna switching.

Only when higher layer parameters Usage of both the two aperiodic SRS resource sets are set to be antenna switching, the two aperiodic SRS resource sets are used for four-port antenna switching.

Based on this, when the higher layer parameters Usage of both the two aperiodic SRS resource sets are set to be antenna switching, the terminal determines that the triggered aperiodic SRS resource sets are used for four-port antenna switching.

The embodiments of the disclosure also provide an uplink-signal-based processing method. As illustrated in FIG. 3, the method includes the following operations.

In 301, a network device configures two aperiodic SRS resource sets for antenna switching for a terminal.

In 302, the terminal performs antenna switching using the two aperiodic SRS resource sets.

It is to be noted that specific processing processes of the network device and the terminal are elaborated above and will not be elaborated herein.

According to the methods provided in the embodiments of the disclosure, the network device configures the two aperiodic SRS resource sets for antenna switching of the terminal, and the terminal performs antenna switching using the two aperiodic SRS resource sets. Considering a guard interval between aperiodic SRSs, for the aperiodic SRSs for antenna switching, the two aperiodic SRS resource sets are configured for the terminal to enable the terminal to transmit the aperiodic SRSs through the two aperiodic SRS resource sets, so that transmission of the aperiodic SRSs for antenna switching is implemented.

In addition, other parameters for indicating the two aperiodic SRS resource sets are further configured for the terminal, so that the terminal may use the configured two aperiodic SRS resource sets accurately.

The disclosure will further be described below in combination with application embodiments in detail.

In an application embodiment, when aperiodic SRSs are used for 1T4R antenna switching, it is configured that two aperiodic SRS resource sets are triggered by a piece of DCI. In such a manner, the two aperiodic SRS resource sets are configured to have identical aperiodicSRS-ResourceTrigger parameter values and different slotoffset parameter values.

In another application embodiment, when aperiodic SRSs are used for 1T4R antenna switching, it is configured that two aperiodic SRS resource sets are triggered by two pieces of DCI, respectively.

Only when higher layer parameters Usage of both the two aperiodic SRS resource sets are set to be antenna switching, the two aperiodic SRS resource sets are used for 1T4R antenna switching.

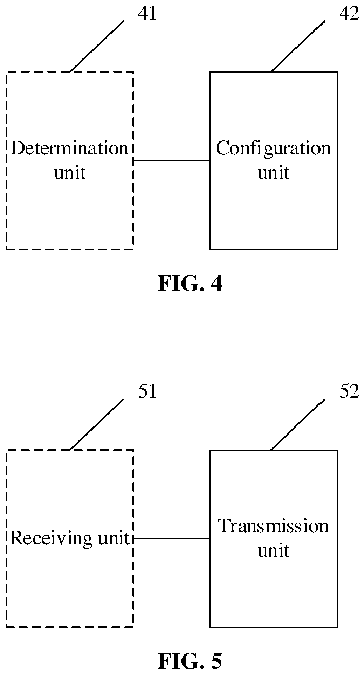

For implementing the method for a network device side in the embodiments of the disclosure, the embodiments of the disclosure also provide an uplink-signal-based processing apparatus, which is arranged in a network device. As illustrated in FIG. 4, the apparatus includes a determination unit 41 and a configuration unit 42, which is not covered by the independent claims.

The determination unit 41 is configured to determine to start antenna switching.

The configuration unit 42 is configured to configure two aperiodic SRS resource sets for antenna switching for a terminal.

In an embodiment, the two aperiodic SRS resource sets include totally four SRS resources, the four SRS resources are transmitted on different OFDM symbols of two different slots, and a SRS port of each SRS resource in the two aperiodic SRS resource sets is associated with a different antenna port of the terminal.

In an implementation, the two aperiodic SRS resource sets are triggered by a piece of DCI for transmission.

In such case, the configuration unit 42 is further configured to execute at least one of the following operations:
configuring the two aperiodic SRS resource sets with same values of higher layer parameter aperiodicSRS-ResourceTrigger; or
configuring the two aperiodic SRS resource sets with different values of higher layer parameter slotoffset.

In another implementation, the two aperiodic SRS resource sets are triggered by two pieces of DCI for transmission, respectively.

During a practical application, the numbers of the SRS resources in the two aperiodic SRS resource sets are configured in the following two manners.

A first manner: each of the two aperiodic SRS resource sets is configured with two SRS resources.

A second manner: one of the two aperiodic SRS resource sets is configured with one SRS resource, and the other of the two aperiodic SRS resource sets is configured with three SRS resources.

After the configuration is completed, the configuration unit 42 may transmit configuration information to the terminal for aperiodic SRS transmission of the terminal.

During the practical application, the determination unit 41 and the configuration unit 42 may be implemented by a processor in the uplink-signal-based processing apparatus in combination with a communication interface.

For implementing the method for a terminal side in the embodiments of the disclosure, the embodiments of the disclosure also provide an uplink-signal-based processing apparatus, which is arranged in a terminal. As illustrated in FIG. 5, the apparatus includes a receiving unit 51 and a transmission unit 52, which is not covered by the independent claims.

The receiving unit 51 is configured to receive configuration information from a network device.

The transmission unit 52 is configured to perform antenna switching using two aperiodic SRS resource sets.

That is, the transmission unit 52 performs antenna switching using the configured two aperiodic SRS resource sets.

In an implementation, the two aperiodic SRS resource sets may be triggered by a piece of DCI for transmission.

Based on this, the transmission unit 52 determines that triggered SRS resource sets are the two aperiodic SRS resource sets based on a piece of received DCI.

In such case, during performing antenna switching, the transmission unit 52 is further configured to determine that the triggered SRS resource sets are the two aperiodic SRS resource sets based on at least one of the following:
two same values of higher layer parameter aperiodicSRS-ResourceTrigger; or
two different values of higher layer parameter slotoffset.

In another implementation, the two aperiodic SRS resource sets may be triggered by two pieces of DCI for transmission, respectively.

Based on this, the transmission unit 52 determines that a triggered SRS resource set is one aperiodic SRS resource set in the two aperiodic SRS resource sets based on one piece of DCI in two pieces of received DCI, and determines that another triggered SRS resource set is the other aperiodic SRS resource set in the two aperiodic SRS resource sets based on the other DCI in the two pieces of received DCI.

In an implementation, antenna switching may be 1T4R antenna (four-port antenna) switching. That is, the aperiodic SRSs for antenna switching are aperiodic SRSs for 1T4R antenna switching.

Only when higher layer parameters Usage of both the two aperiodic SRS resource sets are set to be antenna switching, the two aperiodic SRS resource sets are used for four-port antenna switching.

Based on this, the transmission unit 52 is further configured to:
determine that the triggered SRS resource sets are used for four-port antenna switching when higher layer parameters Usage of both the two aperiodic SRS resource sets are set to be antenna switching.

During a practical application, the receiving unit 51 may be implemented by a communication interface in the uplink-signal-based processing apparatus, and the transmission unit 52 may be implemented by a processor in the uplink-signal-based processing apparatus in combination with the communication interface.

It is to be noted that the uplink-signal-based processing apparatus provided in the embodiment is described with division of each of the abovementioned program modules as an example during uplink-signal-based processing, and during the practical application, such processing may be allocated to different program modules for completion according to a requirement, that is, an internal structure of the device is divided into different program modules to complete all or part of abovementioned processing. In addition, the uplink-signal-based processing apparatus provided in the embodiment belongs to the same concept of the uplink-signal-based processing method embodiment and details about a specific implementation process thereof refer to the method embodiment and will not be elaborated herein.

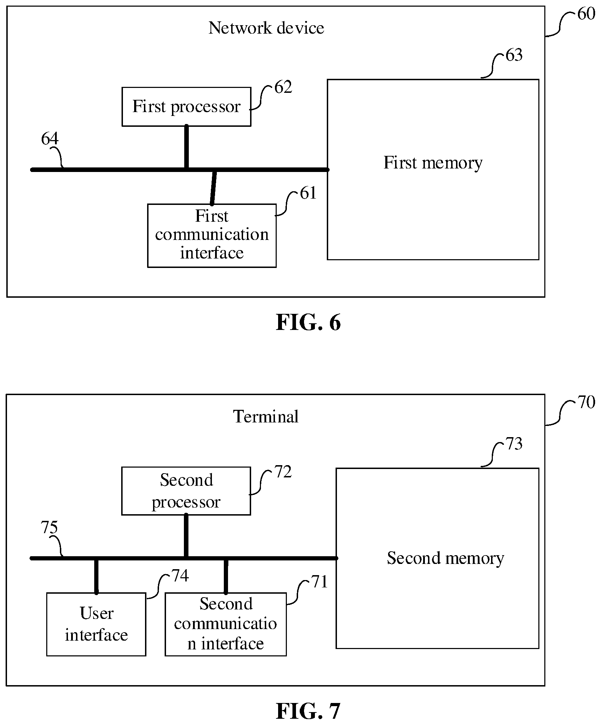

Based on hardware implementation of each program module, for implementing the method for the network device side in the embodiments of the disclosure, the embodiments of the disclosure also provide a network device. As illustrated in FIG. 6, the network device 60 includes a first communication interface 61 and a first processor 62.

The first communication interface 61 may perform information interaction with a terminal.

The first processor 62 is connected with the first communication interface 61 to implement information interaction with the terminal, and is configured to run a computer program to execute the method provided in one or more abovementioned technical solutions. The computer program is stored in a first memory 63.

Specifically, the first processor 62 is configured to, through the first communication interface 61, configure two aperiodic SRS resource sets for antenna switching for the terminal.

During a practical application, the first processor 62, in response to determining to start antenna switching, may configure, through the first communication interface 61, the two aperiodic SRS resource sets for antenna switching for the terminal.

In an implementation, the two aperiodic SRS resource sets may be triggered by a piece of DCI for transmission.

In such case, the first processor 62 is further configured to execute, through the first communication interface 61, at least one of the following operations:
configuring the two aperiodic SRS resource sets with same values of higher layer parameter aperiodicSRS-ResourceTrigger; or
configuring the two aperiodic SRS resource sets with different values of higher layer parameter slotoffset.

In the present invention, the two aperiodic SRS resource sets are configured with same aperiodicSRS-ResourceTrigger parameter values and different slotoffset parameter values.

In another implementation, the two aperiodic SRS resource sets may be triggered by two pieces of DCI for transmission, respectively.

During the practical application, the numbers of the SRS resources in the two aperiodic SRS resource sets may be configured in the following two manners.

A first manner: the first processor 62 configures each of the two aperiodic SRS resource sets with two SRS resources.

A second manner: the first processor 62 configures one of the two aperiodic SRS resource sets with one SRS resource and configures the other aperiodic SRS resource set in the two aperiodic SRS resource sets with three SRS resources.

Of course, during the practical application, as illustrated in FIG. 6, various components in the network device 60 are coupled together through a bus system 64. It is to be understood that the bus system 64 is configured to implement connections and communications between these components. The bus system 64 includes a power bus, a control bus and a status signal bus in addition to a data bus. However, for clear description, various buses in FIG. 6 are marked as the bus system 64.

In the embodiment of the disclosure, the first memory 63 is configured to store various types of data to support the operations of the network device 60.

The method disclosed in the embodiments of the disclosure may be applied to the first processor 62 or implemented by the first processor 62. The first processor 62 may be an integrated circuit chip with a signal processing capability. In an implementation process, steps of the method may be completed by an integrated logic circuit of hardware in the first processor 62 or instructions in a software form. The first processor 62 may be a universal processor, a digital signal processor (DSP) or another programmable logic device (PLD), a discrete gate or transistor logic device, a discrete hardware component and the like. The first processor 62 may implement or execute each method, step and logical block diagram disclosed in the embodiments of the disclosure. The universal processor may be a microprocessor, any conventional processor or the like. The steps of the method disclosed in combination with the embodiments of the disclosure may be directly embodied to be executed and completed by a hardware decoding processor or executed and completed by a combination of hardware and software modules in the decoding processor. The software module may be in a storage medium, and the storage medium is in the first memory 63. The first processor 62 reads information from the first memory 63 and completes the steps of the method in combination with hardware.

In an example, the network device 60 may be implemented by one or more application specific integrated circuits (ASICs), DSPs, PLDs, complex programmable logic devices (CPLDs), field-programmable gate arrays (FPGAs), universal processors, controllers, micro controller units (MCUs), microprocessors or other electronic components, and is configured to execute the abovementioned method.

Based on hardware implementation of each program module, for implementing the method for the terminal side in the embodiments of the disclosure, the embodiments of the disclosure also provide a terminal. As illustrated in FIG. 7, the terminal 70 includes a second communication interface 71 and a second processor 72.

The second communication interface 71 is configured to perform information interaction with a network device.

The second processor 72 is connected with the second communication interface 71 to implement information interaction with the network device, and is configured to run a computer program to execute the method provided in one or more abovementioned technical solutions. The computer program is stored in a second memory 73.

Specifically, the second processor 72 is configured to perform, through the second communication interface 71, antenna switching using two aperiodic SRS resource sets.

That is, aperiodic SRSs for antenna switching are transmitted using the two aperiodic SRS resource sets.

In an implementation, the two aperiodic SRS resource sets are triggered by a piece of DCI for transmission.

Based on this, the second processor 72 determines that triggered SRS resource sets are the two aperiodic SRS resource sets based on a piece of DCI received through the second communication interface 71.

In such case, the second processor 72 is further configured to determine that the triggered SRS resource sets are the two aperiodic SRS resource sets based on at least one of the following:
two same values of higher layer parameter aperiodicSRS-ResourceTrigger; or
two different values of higher layer parameter slotoffset.

In another implementation, the two aperiodic SRS resource sets are triggered by two pieces of DCI for transmission respectively.

Based on this, the second processor 72 determines that a triggered SRS resource set is one aperiodic SRS resource set in the two aperiodic SRS resource sets based on one piece of DCI in two pieces of DCI received through the second communication interface 71 and determines that another triggered SRS resource set is the other aperiodic SRS resource set in the two aperiodic SRS resource sets based on the other DCI in the two pieces of received DCI.

In an implementation, antenna switching may be 1T4R antenna (four-port antenna) switching. That is, the aperiodic SRSs for antenna switching are aperiodic SRSs for 1T4R antenna switching.

Only when higher layer parameters Usage of both the two aperiodic SRS resource sets are set to be antenna switching, the two aperiodic SRS resource sets are configured for four-port antenna switching.

Based on this, the second processor 72 is further configured to:
when higher layer parameters Usage of both the two aperiodic SRS resource sets are set to be antenna switching, determine that the triggered aperiodic SRS resource sets are configured for four-port antenna switching.

Of course, during a practical application, the terminal 70 further includes a user interface 74. Various components in the terminal 70 are coupled together through a bus system 75. It is to be understood that the bus system 75 is configured to implement connections and communications between these components. The bus system 75 includes a power bus, a control bus and a status signal bus in addition to a data bus. However, for clear description, various buses in FIG. 7 are marked as the bus system 75.

The user interface 74 may include a display, a keyboard, a mouse, a trackball, a click wheel, a key, a button, a touch pad or a touch screen, etc.

In the embodiment of the disclosure, the second memory 73 is configured to store various types of data to support the operations of the terminal 70.

The method disclosed in the embodiments of the disclosure may be applied to the second processor 72 or implemented by the second processor 72. The second processor 72 may be an integrated circuit chip with a signal processing capability. In an implementation process, steps of the method may be completed by an integrated logic circuit of hardware in the second processor 72 or instructions in a software form. The second processor 72 may be a universal processor, a DSP or another PLD, a discrete gate or transistor logic device, a discrete hardware component and the like. The second processor 72 may implement or execute each method, step and logical block diagram disclosed in the embodiments of the disclosure. The universal processor may be a microprocessor, any conventional processor or the like. The steps of the method disclosed in combination with the embodiments of the disclosure may be directly embodied to be executed and completed by a hardware decoding processor or executed and completed by a combination of hardware and software modules in the decoding processor. The software module may be in a storage medium, and the storage medium is in the second memory 73. The second processor 72 reads information from the second memory 73 and completes the steps of the method in combination with hardware.

In an example, the terminal 70 may be implemented by one or more ASICs, DSPs, PLDs, CPLDs, FPGAs, universal processors, controllers, MCUs, microprocessors or other electronic components, and is configured to execute the abovementioned method.

It can be understood that specific implementation of the processor in the embodiments of the disclosure may be understood with reference to the abovementioned method.

The memory (for example, the first memory 63 and the second memory 73) in the embodiments of the disclosure may be a volatile memory or a nonvolatile memory, and may also include both the volatile and nonvolatile memories. The nonvolatile memory may be a read only memory (ROM), a programmable read-only memory (PROM), an erasable programmable read-only memory (EPROM), an electrically erasable programmable read-only memory (EEPROM), a ferromagnetic random access memory (FRAM), a flash memory, a magnetic surface memory, a compact disc or a compact disc read-only memory (CD-ROM). The magnetic surface memory may be a disk memory or a tape memory. The volatile memory may be a random access memory (RAM), and is used as an external high-speed cache. It is exemplarily but unlimitedly described that RAMs in various forms may be adopted, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synclink dynamic random access memory (SLDRAM) and a direct rambus random access memory (DRRAM). The memory described in the embodiments of the disclosure is intended to include, but not limited to, memories of these and any other proper types.

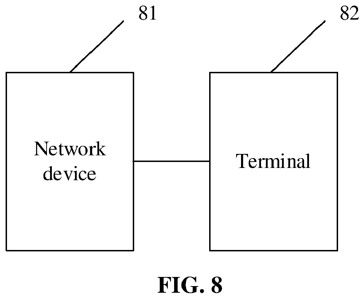

For implementing the method of the embodiments of the disclosure, the embodiments of the disclosure also provide an uplink-signal-based processing system. As illustrated in FIG. 8, the system includes a network device 81 and a terminal 82, which is not covered by the independent claims.

The network device 81 is configured to configure two aperiodic SRS resource sets for antenna switching for the terminal 82.

The terminal 82 is configured to perform antenna switching using the two aperiodic SRS resource sets.

It is to be noted that specific processing processes of the network device 81 and the terminal 82 are elaborated above and will not be elaborated herein.

In an example, the embodiments of the disclosure also provide a storage medium, which may specifically be a computer-readable storage medium, for example, a first memory 63 including a computer program, the computer program being executed by a first processor 62 of a network device 60 to complete the steps of the method for the network device side, or a second memory 73 including a computer program, the computer program being executed by a second processor 72 of a terminal 70 to complete the steps of the method for the terminal side.

The computer-readable storage medium may be a memory such as an FRAM, a ROM, a PROM, an EPROM, an EEPROM, a flash memory, a magnetic surface memory, a compact disc or a CD-ROM.

It is to be noted that "first", "second" and the like are adopted to distinguish similar objects and not intended to describe a specific sequence or order.

In addition, the technical solutions recorded in the embodiments of the disclosure may be freely combined without conflicts.

## Claims

1. An uplink-signal-based processing method, implemented by a network device, the method comprising:
configuring (101) for a terminal two aperiodic sounding reference signal, SRS, resource sets for antenna switching,
**characterized in that**, during configuring the two aperiodic SRS resource sets, the method further comprises:
configuring the two aperiodic SRS resource sets with same values of higher layer parameter aperiodicSRS-ResourceTrigger, and configuring the two aperiodic SRS resource sets with different values of higher layer parameter slotoffset.

2. The uplink-signal-based processing method of claim 1, wherein
the two aperiodic SRS resource sets comprise a total of four SRS resources, the four SRS resources are transmitted in different orthogonal frequency division multiplexing, OFDM, symbols of two different slots, a SRS port of each SRS resource in the two aperiodic SRS resource sets being associated with a different antenna port of the terminal.

3. The uplink-signal-based processing method of claim 1, wherein the two aperiodic SRS resource sets are triggered by downlink control information, DCI.

4. The uplink-signal-based processing method of claim 1, wherein the two aperiodic SRS resource sets are triggered by two DCIs, respectively.

5. The uplink-signal-based processing method of claim 1, wherein, during configuring the two aperiodic SRS resource sets, the method further comprises:
configuring each of the two aperiodic SRS resource sets with two SRS resources.

6. The uplink-signal-based processing method of claim 1, wherein, during configuring the two aperiodic SRS resource sets, the method further comprises:
configuring one of the two aperiodic SRS resource sets with one SRS resource, and configuring the other of the two aperiodic SRS resource sets with three SRS resources.

7. The uplink-signal-based processing method of claim 1, wherein
when higher layer parameter *Usage* of both the two aperiodic SRS resource sets are set to be antenna switching, the two aperiodic SRS resource sets are used for four-port antenna switching.

8. An uplink-signal-based processing method, implemented by a terminal, the method comprising:
performing (201) antenna switching using two aperiodic sounding reference signal, SRS, resource sets configured by a network device,
**characterized in that** the two aperiodic SRS resource sets are configured with:
two same values of higher layer parameter aperiodicSRS-ResourceTrigger, and two different values of higher layer parameter slotoffset.

9. The uplink-signal-based processing method of claim 8, further comprising:
determining that triggered SRS resource sets are the two aperiodic SRS resource sets based on received downlink control information, DCI.

10. The uplink-signal-based processing method of claim 8, further comprising:
determining that a triggered SRS resource set is one of the two aperiodic SRS resource sets based on one of two received DCIs, and determining that another triggered SRS resource set is the other aperiodic SRS resource set in the two aperiodic SRS resource sets based on the other of the two received DCIs.

11. The uplink-signal-based processing method of claim 8, wherein
when higher layer parameter *Usage* of the two aperiodic SRS resource sets are set to be antenna switching, determining that triggered aperiodic SRS resource sets are configured for four-port antenna switching.

12. A network device (60), comprising:
a first communication interface (61); and
a first processor (62), configured to, through the first communication interface, perform the uplink-signal-based processing method of any one of claims 1 to 7.

13. A terminal (70), comprising:
a second communication interface (71); and
a second processor (72), configured to perform, through the second communication interface, the uplink-signal-based processing method of any one of claims 8 to 11.

14. A storage medium having stored therein a computer program that, when executed by a processor, causes the processor to perform the uplink-signal-based processing method of any one of claims 1 to 7 or perform the uplink-signal-based processing method of any one of claims 8 to 11.

## Patentansprüche

1. Uplink-Signal-basiertes Verarbeitungsverfahren, das von einer Netzwerkvorrichtung implementiert wird, wobei das Verfahren umfasst:
Konfigurieren (101) von zwei aperiodischen Sondierungsreferenzsignal-, SRS-, Ressourcensätzen für die Antennenschaltung für ein Endgerät,
**dadurch gekennzeichnet, dass** das Verfahren während des Konfigurierens der zwei aperiodischen SRS-Ressourcensätze ferner umfasst:
Konfigurieren der zwei aperiodischen SRS-Ressourcensätze mit gleichen Werten des Parameters "aperiodicSRS-ResourceTrigger" der höheren Schicht, und Konfigurieren der zwei aperiodischen SRS-Ressourcensätze mit unterschiedlichen Werten des Parameters "slotoffset" der höheren Schicht.

2. Uplink-Signal-basiertes Verarbeitungsverfahren nach Anspruch 1, wobei
die zwei aperiodischen SRS-Ressourcensätze insgesamt vier SRS-Ressourcen umfassen, die vier SRS-Ressourcen in verschiedenen orthogonalen Frequenzmultiplex-(OFDM-) Symbolen von zwei verschiedenen Schlitzen übertragen werden, wobei ein SRS-Anschluss jeder SRS-Ressource in den zwei aperiodischen SRS-Ressourcensätzen mit einem unterschiedlichen Antennenanschluss des Endgeräts verbunden ist.

3. Uplink-Signal-basiertes Verarbeitungsverfahren nach Anspruch 1, wobei die zwei aperiodischen SRS-Ressourcensätze durch Downlink-Steuerinformationen (DCI) ausgelöst werden.

4. Uplink-Signal-basiertes Verarbeitungsverfahren nach Anspruch 1, wobei die zwei aperiodischen SRS-Ressourcensätze durch jeweils zwei DCIs ausgelöst werden.

5. Uplink-Signal-basiertes Verarbeitungsverfahren nach Anspruch 1, wobei das Verfahren während des Konfigurierens der zwei aperiodischen SRS-Ressourcensätze ferner umfasst:
Konfigurieren jedes der zwei aperiodischen SRS-Ressourcensätze mit zwei SRS-Ressourcen.

6. Uplink-Signal-basiertes Verarbeitungsverfahren nach Anspruch 1, wobei das Verfahren während des Konfigurierens der zwei aperiodischen SRS-Ressourcensätze ferner umfasst:
Konfigurieren eines der zwei aperiodischen SRS-Ressourcensätze mit einer SRS-Ressource, und Konfigurieren des anderen der zwei aperiodischen SRS-Ressourcensätze mit drei SRS-Ressourcen.

7. Uplink-Signal-basiertes Verarbeitungsverfahren nach Anspruch 1, wobei,
wenn der Parameter *"Usage"* der höheren Schicht der zwei aperiodischen SRS-Ressourcensätze auf Antennenschaltung eingestellt sind, die zwei aperiodischen SRS-Ressourcensätze für Vier-Anschluss-Antennenschaltung verwendet werden.

8. Uplink-Signal-basiertes Verarbeitungsverfahren, das von einem Endgerät implementiert wird, wobei das Verfahren umfasst:
Durchführen (201) der Antennenschaltung unter Verwendung von zwei aperiodischen Sondierungsreferenzsignals-, SRS-, Ressourcensätzen, die durch eine Netzwerkvorrichtung konfiguriert werden,
**dadurch gekennzeichnet, dass** die zwei aperiodischen SRS-Ressourcensätze konfiguriert sind, mit:
zwei gleichen Werten des Parameters "aperiodicSRS-ResourceTrigger" der höheren Schicht und zwei unterschiedlichen Werten des Parameters "slotoffset" der höheren Schicht.

9. Uplink-Signal-basiertes Verarbeitungsverfahren nach Anspruch 8, ferner umfassend:
Bestimmen, dass die ausgelösten SRS-Ressourcensätze die zwei aperiodischen SRS-Ressourcensätze sind, basierend auf den empfangenen Downlink-Steuerinformationen, DCI.

10. Uplink-Signal-basiertes Verarbeitungsverfahren nach Anspruch 8, ferner umfassend:
Bestimmen, dass ein ausgelöster SRS-Ressourcensatz einer der zwei aperiodischen SRS-Ressourcensätze ist, basierend auf einer von zwei empfangenen DCI, und Bestimmen, dass ein anderer ausgelöster SRS-Ressourcensatz der andere aperiodische SRS-Ressourcensatz in den zwei aperiodischen SRS-Ressourcensätzen ist, basierend auf den anderen der zwei empfangenen DCI.

11. Uplink-Signal-basiertes Verarbeitungsverfahren nach Anspruch 8, wobei,
wenn der Parameter *"Usage"* der höheren Schicht der zwei aperiodischen SRS-Ressourcensätze auf Antennenschaltung eingestellt sind, Bestimmen, dass die ausgelösten aperiodischen SRS-Ressourcensätze für Vier-Anschluss-Antennenschaltung konfiguriert sind.

12. Netzwerkvorrichtung (60), umfassend:
eine erste Kommunikationsschnittstelle (61); und
einen ersten Prozessor (62), der dazu konfiguriert ist, über die erste Kommunikationsschnittstelle das Uplink-Signal-basierte Verarbeitungsverfahren nach einem der Ansprüche 1 bis 7 durchzuführen.

13. Endgerät (70), umfassend:
eine zweite Kommunikationsschnittstelle (71); und
einen zweiten Prozessor (72), der dazu konfiguriert ist, über die erste Kommunikationsschnittstelle das Uplink-Signal-basierte Verarbeitungsverfahren nach einem der Ansprüche 8 bis 11 durchzuführen.

14. Speichermedium, das ein darin gespeichertes Computerprogramm aufweist, das, wenn es durch einen Prozessor ausgeführt wird, bewirkt, dass der Prozessor das Uplink-Signal-basierte Verarbeitungsverfahren nach einem der Ansprüche 1 bis 7 durchführt oder das Uplink-Signal-basierte Verarbeitungsverfahren nach einem der Ansprüche 8 bis 11 durchführt.

## Revendications

1. Procédé de traitement basé sur un signal de liaison montante, mis en oeuvre par un dispositif de réseau, le procédé comprenant :
la configuration (101) pour un terminal de deux ensembles de ressources de signaux de référence de sondage, SRS, apériodiques pour la commutation d'antenne,
**caractérisé en ce que**, lors de la configuration des deux ensembles de ressources SRS apériodiques, le procédé comprend en outre :
la configuration des deux ensembles de ressources SRS apériodiques avec les mêmes valeurs de paramètre de couche supérieure aperiodicSRS-ResourceTrigger, et la configuration des deux ensembles de ressources SRS apériodiques avec différentes valeurs de paramètre de couche supérieure slotoffset.

2. Procédé de traitement basé sur un signal de liaison montante selon la revendication 1, dans lequel
les deux ensembles de ressources SRS apériodiques comprennent un total de quatre ressources SRS, les quatre ressources SRS sont transmises dans différents symboles de multiplexages par répartition orthogonale de la fréquence, OFDM, de deux créneaux différents, un port SRS de chaque ressource SRS dans les deux ensembles de ressources SRS apériodiques étant associé à un port d'antenne différent du terminal.

3. Procédé de traitement basé sur un signal de liaison montante selon la revendication 1, dans lequel les deux ensembles de ressources SRS apériodiques sont déclenchés par des informations de commande de liaison descendante, DCI.

4. Procédé de traitement basé sur un signal de liaison montante selon la revendication 1, dans lequel les deux ensembles de ressources SRS apériodiques sont déclenchés par deux DCI, respectivement.

5. Procédé de traitement basé sur un signal de liaison montante selon la revendication 1, dans lequel, pendant la configuration des deux ensembles de ressources SRS apériodiques, le procédé comprend en outre :
la configuration de chacun des deux ensembles de ressources SRS apériodiques avec deux ressources SRS.

6. Procédé de traitement basé sur un signal de liaison montante selon la revendication 1, dans lequel, pendant la configuration des deux ensembles de ressources SRS apériodiques, le procédé comprend en outre :
la configuration de l'un des deux ensembles de ressources SRS apériodiques avec une ressource SRS, et la configuration de l'autre des deux ensembles de ressources SRS apériodiques avec trois ressources SRS.

7. Procédé de traitement basé sur un signal de liaison montante selon la revendication 1, dans lequel
lorsque le paramètre de couche supérieure *Usage* des deux ensembles de ressources SRS apériodiques est défini comme étant une commutation d'antenne, les deux ensembles de ressources SRS apériodiques sont utilisés pour une commutation d'antenne à quatre ports.

8. Procédé de traitement basé sur un signal de liaison montante, mis en oeuvre par un terminal, le procédé comprenant :
l'exécution (201) d'une commutation d'antenne à l'aide de deux ensembles de ressources de signaux de sondage de référence apériodiques, SRS, configurés par un dispositif de réseau,
**caractérisé en ce que** les deux ensembles de ressources SRS apériodiques sont configurés avec :
deux valeurs identiques du paramètre de couche supérieure aperiodicSRS-ResourceTrigger et deux valeurs différentes du paramètre de couche supérieure slotoffset.

9. Procédé de traitement basé sur un signal de liaison montante selon la revendication 8, comprenant en outre :
la détermination que les ensembles de ressources SRS déclenchés sont les deux ensembles de ressources SRS apériodiques sur la base des informations de commande de liaison descendante, DCI, reçues.

10. Procédé de traitement basé sur un signal de liaison montante selon la revendication 8, comprenant en outre :
la détermination qu'un ensemble de ressources SRS déclenché est l'un des deux ensembles de ressources SRS apériodiques sur la base de l'un des deux DCI reçus, et la détermination qu'un autre ensemble de ressources SRS déclenché est l'autre ensemble de ressources SRS apériodiques dans les deux ensembles de ressources SRS apériodiques sur la base de l'autre des deux DCI reçus.

11. Procédé de traitement basé sur un signal de liaison montante selon la revendication 8, dans lequel,
lorsque le paramètre de couche supérieure *Usage* des deux ensembles de ressources SRS apériodiques est défini comme étant une commutation d'antenne, la détermination que les ensembles de ressources SRS apériodiques déclenchés sont configurés pour une commutation d'antenne à quatre ports.

12. Dispositif de réseau (60), comprenant :
une première interface de communication (61) ; et
un premier processeur (62), configuré pour, par l'intermédiaire de la première interface de communication, exécuter le procédé de traitement basé sur un signal de liaison montante selon l'une quelconque des revendications 1 à 7.

13. Terminal (70), comprenant :
une deuxième interface de communication (71) ; et
un deuxième processeur (72), configuré pour exécuter, par l'intermédiaire de la deuxième interface de communication, le procédé de traitement basé sur un signal de liaison montante selon l'une quelconque des revendications 8 à 11.

14. Support de stockage dans lequel est stocké un programme informatique qui, lorsqu'il est exécuté par un processeur, amène le processeur à exécuter le procédé de traitement basé sur un signal de liaison montante selon l'une quelconque des revendications 1 à 7 ou à exécuter le procédé de traitement basé sur un signal de liaison montante selon l'une quelconque des revendications l'une des revendications 8 à 11.
